# EUROPÄISCHE PATENTANMELDUNG

(11) **EP 1 279 583 A2**
(43) Veröffentlichungstag der Anmeldung: **29.01.2003**
(21) Anmeldenummer: 02010633.2
(22) Anmeldetag: 11.05.2002
(51) Int. Cl.: B62B 9/10, B62B 7/10

(54) **Zusammenklappbares Kinderwagenfahrgestell**

(30) Priorität: 26.07.2001 DE 20112122 U
(71) Anmelder: BRITAX-TEUTONIA KINDERWAGENFABRIK GmbH, D-32120 Hiddenhausen (DE)
(72) Erfinder: Maxisch, Peter, 33106 Paderborn (DE)
(74) Vertreter: Dantz, Jan Henning

(57) **Zusammenfassung**

Ein zusammenklappbares Kinderwagenfahrgestell (10), welches zwei seitlich angeordnete, ein Oberteil bildende Scherengestelle (11,12) und einen die Radachsen (14,15) tragenden Unterbau (13) aufweist, soll so gestaltet werden, dass durch Beibehaltung geringst möglicher Abmessungen im zusammengeklappten Zustand die Seitenstabilität zur Erhöhung des Fahrkomforts erhöht wird.

Erfindungsgemäß ist der Unterbau (13) und die zugewandten Enden der Scherenarme (11a,11c,12a,12c) der Scherengestelle (11,12) durch Gelenke (21) verbunden. Im aufgerichteten Zustand des Oberteils (11,12) wird durch den Unterbau (13) und durch die Oberteile (11,12) eine starre Baueinheit gebildet. Der Unterbau (13) weist einen Rammen auf, und die Radachsen (14,15) sind durch federnde Lagerklötze (20) an den parallel und im Abstand verlaufenden Holmen des Rammens festgelegt.

Das erfindungsgemäße Kinderwagenfahrgestell ist für alle Bauarten von Kinderwagen geeignet.

## Beschreibung

Die Erfindung bezieht sich auf ein zusammenklappbares Kinderwagenfahrgestell, welches zwei seitlich angeordnete, ein Oberteil bildende Scherengestelle und einen die Radachsen tragenden Unterbau aufweist.

Das in Rede stehende Kinderwagenfahrgestell ist in vielen Ausführungen bekannt. An dem Kinderwagenfahrgestell ist außerdem noch ein Schiebebügel angeordnet, der im normalen Gebrauchszustand verriegelt ist. Soll der Kinderwagen jedoch leer transportiert werden, wird das Kinderwagenfahrgestell zusammengeklappt. Dazu muß zunächst der Schiebebügel entriegelt werden und über das Kinderwagenfahrgestell hinweg geschwenkt werden. Sofern dafür Federelemente verwendet werden, sind diese einem Verschleiß unterlegen. Der Unterbau ist gegenüber dem Oberteil federnd angeordnet. Beim Zusammenklappen vergrößert sich der Abstand der beiden Achsen, so dass sich eine relativ große Länge für das zusammengeklappte Paket ergibt. Außerdem ist die Seitenstabilität des Kinderwagenfahrgestelles nicht zufriedenstellend.

Bei den bisherigen Bauweisen kann sich das Oberteil gegenüber dem Unterbau bewegen, wenn auch in relativ engen Grenzen. Dadurch wird der Fahrkomfort beeinträchtigt.

Der Erfindung liegt die Aufgabe zugrunde, ein Kinderwagenfahrgestell der eingangs näher beschriebenen Art so zu gestalten, dass bei Beibehaltung geringstmöglicher Abmessungen im zusammengeklappten Zustand die Seitenstabilität zur Erhöhung des Fahrkomforts erhöht wird.

Die gestellte Aufgabe wird gelöst, indem der Unterbau und die zugewandten Enden der Scherenarme des Scherengestells derart durch Gelenke miteinander verbunden sind, dass zumindest im aufgerichteten Zustand des Oberteils durch den Unterbau und durch das Oberteil eine starre Baueinheit oder eine als starr anzusehende Baueinheit gebildet wird.

Durch die starre Baueinheit bzw. durch die als starr anzusehende Baueinheit wird die Seitenstabilität des Kinderwagenfahrgestells und somit der Fahrkomfort eines Kinderwagens wesentlich erhöht. Da nach wie vor die Verbindung zwischen dem Unterbau und dem Oberteil durch bewegliche Elemente erfolgt, ist auch dann noch diese Baueinheit als starr anzusehen, wenn die die Verbindung schaffenden Bauelemente mit dem üblichen Spiel gelagert sind, bzw. ineinander greifen. Die Gelenke sind so ausgelegt, dass zum Zusammenklappen und zum Aufrichten des Oberteils keine oder keine nennenswerten Reibungskräfte zu überwinden sind. Die Gelenke sind jedoch so ausgelegt, dass die größer werdenden Abstände der unteren Enden der Scherenarme beim Zusammenklappen des Kinderwagenfahrgestells ausgeglichen werden. Da der Abstand der Radachsen sich nunmehr nicht mehr ändert wird der Platzbedarf im zusammengeklappten Zustand verkleinert da die Länge des zusammengeklappten Pakets gegenüber den bislang bekannten Ausführungen verringert wird. Außerdem wird das Beladen eines Kofferraums vereinfacht. In weiterer Ausgestaltung ist vorgesehen, dass der Unterbau einen Rahmen aufweist, und dass die Radachsen mittels federnden Lagerklötzen an den parallel und im Abstand zu den Radachsen verlaufenden Holmen des Rahmens festgesetzt sind. Durch die Federnden Lagerklötze sind nunmehr die Radachsen gegenüber dem Unterbau federnd angeordnet. Um die Vergrößerung des Abstandes der unteren Enden der Scherenarme beim Zusammenklappen des Kinderwagenfahrgestells auszugleichen ist vorgesehen, dass die Gelenke schwenkbar an dem Unterbau gelagert sind, und dass die Scherenarme schwenkbar im gegenüberliegenden Endbereich der laschenartigen Gelenke drehbar gelagert sind. Die Gelenke bestehen zweckmäßigerweise aus zwei Seitenteilen, die durch wenigstens einen Mittelsteg miteinander verbunden sind, der an der den Scherenarmen abgewandten Seite liegt. Dadurch werden die notwendigen Bewegungen der Gelenke und der Scherenarme ermöglicht. Jedes Gelenk ist zweckmäßigerweise ein einstückiges Formteil, da dadurch die Herstellkosten verringert werden.

Aus Sicherheitsgründen ist ein bestimmter Abstand der Radachsen notwendig, um beispielsweise ein Kippen zu verhindern. Eine kompakte, materialsparende Ausführung ergibt sich, wenn die Radachsen an den einander abgewandten Seiten der beiden parallel dazu verlaufenden Holme angeordnet sind. Die Abmessungen des Rahmens des Unterbaues können dann minimiert werden, wobei der notwendige Abstand der Radachsen gegeben ist. Bezogen auf eine horizontale Standfläche ist vorgesehen, dass der Rahmen ebenfalls horizontal steht, und dass zumindest die parallel und im Abstand zu den Radachsen verlaufenden Holme auf der gleichen Höhe liegen wie die Radachsen oder ein klein wenig nach oben, d.h. in Richtung zu den Verriegelungsleisten für den Sitz- und Liegeeinsatz versetzt sind. Die Lagerklötze würden dann mit ihren Mittellängsachsen einen kleinen spitzen Winkel zur Horizontalen einschließen. Zweckmäßigerweise sind die Lagerklötze zweiteilig gestaltet. Die beiden Teile für jeden Lagerklotz können dann durch Schrauben fest miteinander verbunden sein. Die Bohrungen zur Halterung der Radachsen sind so ausgelegt, dass die Radachsen festgeklemmt werden. Die Blockierung des Kinderwagenfahrgestells erfolgt nach wie vor über die Verriegelung des Schiebebügels. Zweckmäßigerweise sind die Gelenke an den quer zu den Radachsen stehenden Holmen des Rahmens gelagert. Dadurch wird die Last auf mehrere Bereiche der Holme des Rahmens verteilt. Außerdem wird die Bewegungsfreiheit der Gelenke nicht beeinträchtigt. Die Lagerklötze sind für eine federnde Verbindung mit dem Unterbau bzw. dem Rahmen ausgelegt.

Anhand der beiliegenden Zeichnungen wird die Erfindung noch näher erläutert. Es zeigen:

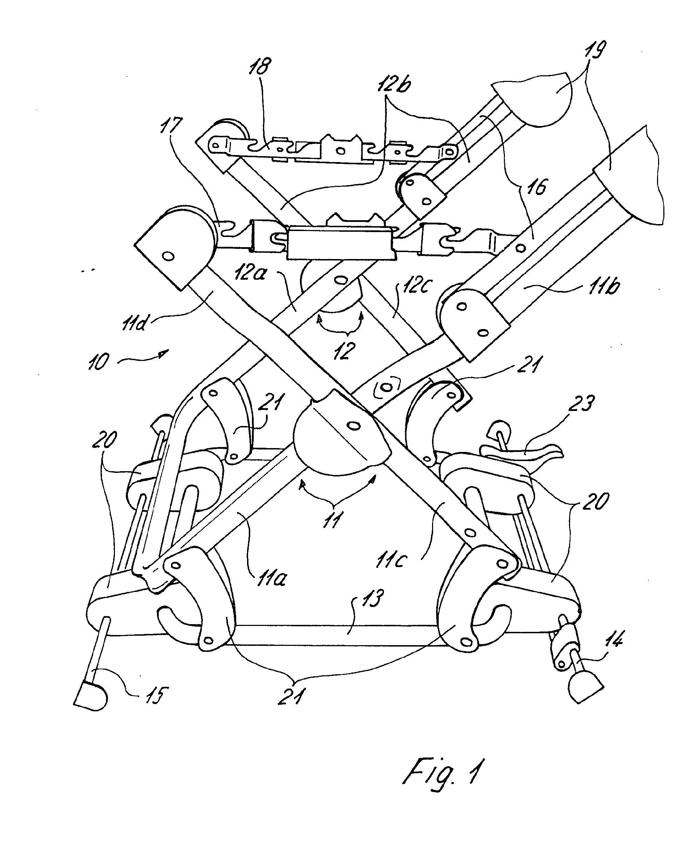

- Figur 1: das Kinderwagenfahrgestell in einer Teilansicht, im gebrauchsfähigen Zustand und

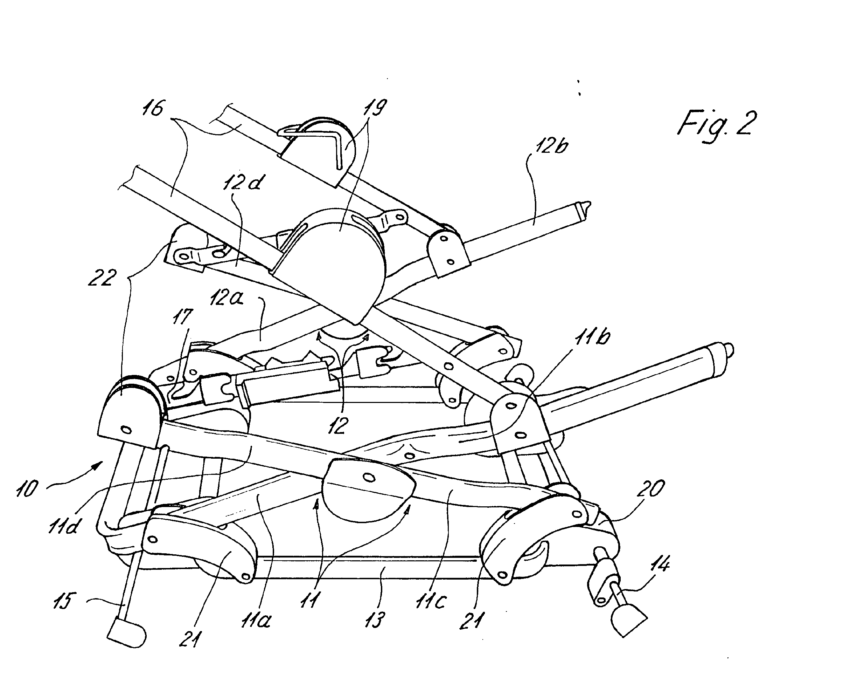

- Figur 2: das Kinderwagenfahrgestell nach der Figur 1 im teilweise zusammengeklappten Zustand.

Das in den Figuren dargestellte Kinderwagenfahrgestell 10 besteht im wesentlichen aus zwei seitlichen Scherengestellen 11, 12 Unterbau 13 in Form eines Rahmens, zwei parallel und im Abstand zueinander verlaufende Radachsen 14, 15, einem schwenkbaren Schiebebügel 16 sowie zwei Verriegelungsleisten 17, 18 zur Halterung eines Sitz- oder Liegeeinsatzes. Zum Kinderwagenfahrgestell 10 gehören ebenfalls noch vier auf den Endbereichen der Radachsen 14, 15 frei drehbar gelagerte Laufräder, die aus Gründen der besseren Darstellung demontiert wurden. Die Scherengestelle 11, 12 bestehen aus den sich kreuzenden Scherenarmen 11a, 11b, 11c, 11d 12a, 12b, 12c, 12d. Die Drehpunkte der Scherenarme 11a, 11b, 11c, 11d 12a, 12b, 12c, 12d liegen etwa in den Mitten. Die dem Schiebebügel 16 zugeordneten Scherenarme 11b und 12b sind gegenüber den anderen Armen verlängert, um mittels Verriegelungsschieber 19 den an diesen Hebelarmen festgelegten Schiebebügel 16 zu verriegeln bzw. zu entriegeln. Im dargestellten Ausführungsbeispiel ist der Unterbau 13 als geschlossener viereckiger Rahmen gestaltet, wobei die Ecken in einem Bogen verlaufen. Auf die beiden parallel zu den Radachsen 14, 15 verlaufenden Holme des Unterbaues 13 sind angrenzend an die Eckbereiche vier Lagerklötze 20 festgeklemmt. Die gegenüberliegenden Enden sind mit Durchgangsbohrungen versehen, die so ausgelegt sind, dass die Radachsen 14 und 15 unbeweglich gehalten sind. Im dargestellten Ausführungsbeispiel steht der Rahmen 13 ein klein wenig höher als die Radachsen 14, 15. Diese Höhendifferenz kann jedoch geändert werden. Die dem Rahmen 13 zugeordneten unteren Enden der Scherenarme 11a, 11c, 12a, 12c sind über segmentartig gestaltete Gelenke 21 am Unterbau 13 angelenkt. Die Gelenke selbst sind schwenkbar an den quer zu den Radachsen 14, 15 stehenden Holmen des Rahmens 13 angelenkt. Die Gelenke 21 sind so ausgelegt, dass nach dem Entriegeln des Schiebebügels das Scherengestell 11 zusammengelegt werden kann. Die Scherenarme 11a, 11b, 11c, 11d 12a, 12b, 12c, 12d stehen dann in einem äußerst geringen spitzen Winkel zueinander. Die Sicherung des Schiebebügels 16 erfolgt durch Taschen 22, die an den oberen Endbereichen der Scherenarme 11d, 12d befestigt sind. Die Federung des Kinderwagenfahrgestells besteht ebenfalls aus den Lagerklötzen 20, die in nicht näher dargestellter Weise entsprechend ausgelegt sind. Der Unterbau 13 ist ebenfalls wie die Scherengestelle 11 aus Stahlrohren gefertigt. Das Kinderwagenfahrgestell 10 ist außerdem noch mit einer Feststellbremse ausgestattet, die durch einen Fußhebel 23 betätigbar ist.

Die Erfindung ist nicht auf das dargestellte Ausführungsbeispiel beschränkt. Wesentlich ist, dass die Scherengestelle 11, 12 über die Gelenke 21 mit dem Unterbau 13 verbunden sind, damit die Vergrößerung des Abstandes der unteren Enden der Scherenarme beim Zusammenklappen ausgeglichen werden kann.

## Patentansprüche

1. Zusammenklappbares Kinderwagenfahrgestell, welches zwei seitlich angeordnete, ein Oberteil bildende Scherengestelle und einen die Radachsen tragenden Unterbau aufweist, **dadurch gekennzeichnet, dass** der Unterbau (13) und die zugewandten Enden der Scherenarme (11a, 11b, 11c, 11d, 12a, 12b, 12c, 12d) der Scherengestelle (11, 12) derart durch Gelenke (21) miteinander verbunden sind, dass zumindest im aufgerichteten Zustand des Oberteils (11, 12) durch den Unterbau (13) und durch das Oberteil (11, 12) eine starre Baueinheit oder eine als starr anzusehende Baueinheit gebildet ist.

2. Zusammenklappbares Kinderwagenfahrgestell nach Anspruch 1, **dadurch gekennzeichnet, dass** der Unterbau (13) einen Rahmen aufweist, und dass die Radachsen (14, 15) mittels federnden Lagerklötzen (20) an den parallel und im Abstand zu den Radachsen verlaufenden Holmen des Rahmens festgelegt sind.

3. Zusammenklappbares Kinderwagenfahrgestell nach Anspruch 1, **dadurch gekennzeichnet, dass** die Gelenke (21) schwenkbar an dem Unterbau (13) gelagert sind, und dass die Scherenarme schwenkbar im gegenüberliegenden Endbereich der laschenartigen Gelenke (21) gelagert sind.

4. Zusammenklappbares Kinderwagenfahrgestell nach Anspruch 3, **dadurch gekennzeichnet, dass** die Gelenke aus beabstandeten Seitenteilen und durch wenigstens einen die Seitenteile verbindenden Mittelsteg gebildet sind.

5. Zusammenklappbares Kinderwagenfahrgestell nach einem oder mehreren der vorhergehenden Ansprüche 1 bis 4, **dadurch gekennzeichnet, dass** die Radachsen (14, 15) an den einander abgewandten Seiten der parallel verlaufenden Holme des Rahmens des Unterbaus (13) angeordnet sind.

6. Zusammenklappbares Kinderwagenfahrgestell nach einem oder mehreren der vorhergehenden Ansprüche 1 bis 3, **dadurch gekennzeichnet, dass** der Rahmen des Unterbaus (13) höhenmäßig im Bereich der Radachsen (14, 15) liegt, vorzugsweise jedoch ein klein wenig nach oben in Richtung zu den Verriegelungsleisten (17, 18) versetzt ist.

7. Zusammenklappbares Kinderwagenfahrgestell nach einem oder mehreren der vorhergehenden Ansprüche 2 bis 6, **dadurch gekennzeichnet, dass** die Lagerklötze (20) zweiteilig sind, und dass die Teile mittels Schrauben derart miteinander verbunden sind, dass jeder Lagerklotz federnd bzw. rückstellend auf dem jeweiligen Holm des Rahmens des Unterbaus (13) aufgesetzt ist, und dass die Radachsen (14, 15) unbeweglich festgeklemmt sind.

8. Zusammenklappbares Kinderwagenfahrgestell nach einem oder mehreren der vorhergehenden Ansprüche 1 bis 7, **dadurch gekennzeichnet, dass** die Gelenke (21) an den quer zu den Radachsen (14, 15) stehenden Holmen des Unterbaus (13) gelagert sind.
